# EUROPEAN PATENT SPECIFICATION

(11) **EP 3 586 605 B1**
(45) Date of publication and mention of the grant of the patent: **22.12.2021**
(21) Application number: 19173954.9
(22) Date of filing: 10.05.2019
(51) Int. Cl.: A01G 9/24, A01G 9/18, A01G 31/06

(54) **VERTICAL CULTIVATION SYSTEM FOR CROPS**
VERTIKALES KULTIVIERUNGSSYSTEM FÜR ERNTEGUT
SYSTÈME DE CULTURE VERTICAL POUR CULTURES

(30) Priority: 26.06.2018 TW 107121976
(43) Date of publication of application: 01.01.2020
(73) Proprietor: YesHealth Agri-Biotechnology Co., Ltd., Taoyuan City (TW)
(72) Inventor: Tsai, Wen-Chin, Taoyuan City (TW); Tsai, Tsung-Lin, Taoyuan City (TW); Wang, Wang-Nang, Taoyuan City (TW); Chen, Wen-Yang, Taoyuan City (TW)
(74) Representative: Lang, Christian

(56) References cited:
- EP-A1- 3 326 452
- WO-A1-2016/061637
- CN-A- 106 489 707
- CN-A- 107 836 290
- KR-A- 20160 081 120
- US-A- 3 404 618
- US-A- 5 035 077
- US-A1- 2018 116 129

## Description

### Technical Field of the Invention:

The present disclosure relates to a crop cultivation system, and in particularly to, the vertical cultivation system for crops which can provide a proper environmental condition for crop growth with relatively cheap cost, and adjust the environmental condition for the different planted crops or actual crop growth statuses in real time.

### Related Art of the Invention:

Conventional large crop cultivation plants usually utilize open and plane farm lands (i.e. open-air cultivation), thus need ultra large land areas, and are affected by weather easily. Many research units of countries try to improve crop cultivation systems, and want to increase harvesting rates of crops (especially, food crops) and save energy in relatively favorable environments.

To make planted crops not limited by natural environment conditions, general cultivation facilities destroy principles of proper times and locations. Usually, under shielding of a building facility, relative devices are utilized to control light, water, air, nutrient and other crop growth element, thus the crops are massively harvested all year without being affected by external bad environments, and the objectives of harvesting rate enhancement and energy saving can be achieved.

However, conventional crop cultivation facility systems usually improve natural environmental conditions, such as light, water, temperature and humidity, and are dedicated to solve issues of light illumination and water supplying firstly, but do not seriously control the water temperature and the air quality. When ranges of the water temperature and the air quality fall outside proper ranges of crop growth, it may be hard for the crops to grow up, and the harvesting rate of the crops may be unstable. A conventional vertical cultivation system is shown in document US 5 035 077 A. This system comprises a buried building facility, a nutrient liquid supply unit, a lighting unit, an air conditioning unit, an audio adjustment unit and a control unit, wherein the nutrient liquid supply unit is an irrigation system having nozzles configured to spray a nutrient liquid to a cultivation space accommodating planting troughs from above.

Furthermore, different crops have different growth environmental conditions, and the same crops in different growth stages have different proper environmental conditions. Therefore, to manage growth of the planted crops in the building facility and to make the crop growth not limited by the natural environment, how to efficiently change the facility environment in real time is an issue which manufacturers and researching units try to solve in recent years.

### Summary of the Invention:

To solve at least one of technical problems in related art, the present invention provides a vertical cultivation system for crops, and the system can adjust the environmental condition for the different planted crops or actual crop growth statuses in real time, thus providing a relatively low cost solution for providing proper crop growth environmental condition.

To achieve at least one of objectives in the present invention, the present invention provides a vertical cultivation system for crops, comprising a building facility, a nutrient liquid supply unit, a lighting unit, an air conditioning unit, an audio adjustment unit and a control unit. The building facility covers and forms a cultivation space, the cultivation space is disposed with at least one shelf, and the shelf is disposed with cultivation troughs allocated on different layers. The nutrient liquid supply unit is disposed with at least one liquid storage tank buried under a ground surface, the liquid storage tank is communicative to each the cultivation troughs via a pump a delivery pipeline. The lighting unit is disposed with at least one photoelectric module corresponding to one of the cultivation troughs, and the photoelectric module generates a preset light source when being powered on. The air conditioning unit is disposed with at least one cooling pad communicative to the cultivation space of the building facility, at least one water supply device connected to the cooling pad and at least one bubble module connected to the water supply device. The audio adjustment unit is disposed with at least one speaker communicative to the cultivation space of the building facility and an audio player electrically connected to the speaker. The control unit is at least electrically connected to the pump, the photoelectric module, the bubble module and the audio player, so as to at least control operations of the pump, the photoelectric module, the bubble module and the audio player.

The vertical cultivation system for the crops, provided by the present invention, can manage the planted crops in a manner of allocating the crops in different vertical layers, and thus the limited ground space can be efficiently utilized. Further, under the barrier of the soil, the nutrient liquid in the liquid storage tank is less affected by the external atmosphere temperature and prevented from being frozen, and a low cost solution for providing proper water temperature condition to the crop growth is achieved. By cooperation of the nutrient liquid supply unit, the lighting unit, the air conditioning unit, the audio adjustment unit and the control unit, the environmental condition for the planted crops or actual crop growth statuses, such as the nutrient, light, temperature, humidity, oxygen content of air and even sonic vibration frequency, can be adjusted in real time, thus increasing the crop harvesting rate and saving energy.

According to the above technical features, the bubble module is disposed at least one oxygen bubble generator.

According to the above technical features, the bubble module is disposed at least one carbon dioxide bubble generator.

According to the above technical features, the bubble module is disposed at least one ozone bubble generator.

According to the above technical features, the bubble module is disposed at least one oxygen bubble generator and at least one carbon dioxide bubble generator.

According to the above technical features, the bubble module is disposed at least one carbon dioxide bubble generator and at least one ozone bubble generator.

According to the above technical features, the bubble module is disposed at least one oxygen bubble generator and at least one ozone bubble generator.

According to the above technical features, the bubble module is disposed at least one oxygen bubble generator, at least one carbon dioxide bubble generator and at least one ozone bubble generator.

According to the above technical features, the air conditioning unit is disposed at least one oxygen bubble generator being connected to the water supply device.

According to the above technical features, the air conditioning unit is disposed at least one carbon dioxide bubble generator being connected to the water supply device.

According to the above technical features, the air conditioning unit is disposed at least one ozone bubble generator being connected to the water supply device.

According to the above technical features, the photoelectric module of the lighting unit is disposed with first photoelectric components, second photoelectric components and third photoelectric components, the first photoelectric components, the second photoelectric components and the third photoelectric components respectively generate illumination light sources, long-wave ultraviolet (UVA) light sources, middle-wave ultraviolet (UVB) light sources when being powered on.

According to the above technical features, the air conditioning unit is disposed with at least one carbon dioxide bubble generator being connected to the water supply device; the photoelectric module of the lighting unit is disposed with first photoelectric components, second photoelectric components and third photoelectric components, the first photoelectric components, the second photoelectric components and the third photoelectric components respectively generate illumination light sources, long-wave ultraviolet (UVA) light sources, middle-wave ultraviolet (UVB) light sources when being powered on.

According to the above technical features, , the air conditioning unit is disposed with at least one carbon dioxide bubble generator being connected to the water supply device; the photoelectric module of the lighting unit is disposed with first photoelectric components, second photoelectric components and third photoelectric components, the first photoelectric components, the second photoelectric components and the third photoelectric components respectively generate illumination light sources, long-wave ultraviolet (UVA) light sources, middle-wave ultraviolet (UVB) light sources when being powered on.

According to the above technical features, the air conditioning unit is disposed with at least one ozone bubble generator being connected to the water supply device; the photoelectric module of the lighting unit is disposed with first photoelectric components, second photoelectric components and third photoelectric components, the first photoelectric components, the second photoelectric components and the third photoelectric components respectively generate illumination light sources, long-wave ultraviolet (UVA) light sources, middle-wave ultraviolet (UVB) light sources when being powered on.

According to the above technical features, the air conditioning unit is disposed with at least one bubble module being connected to the water supply device, and the bubble module is disposed with at least one oxygen bubble generator, at least one carbon dioxide bubble generator and at least one ozone bubble generator; the photoelectric module of the lighting unit is disposed with first photoelectric components, second photoelectric components and third photoelectric components, the first photoelectric components, the second photoelectric components and the third photoelectric components respectively generate illumination light sources, long-wave ultraviolet (UVA) light sources, middle-wave ultraviolet (UVB) light sources when being powered on.

According to the above technical features, the air conditioning unit is disposed with at least one oxygen bubble generator, at least one carbon dioxide bubble generator and at least one ozone bubble generator; the photoelectric module of the lighting unit is disposed with first photoelectric components, second photoelectric components and third photoelectric components, the first photoelectric components, the second photoelectric components and the third photoelectric components respectively generate illumination light sources, long-wave ultraviolet (UVA) light sources, middle-wave ultraviolet (UVB) light sources when being powered on.

According to the above technical features, the building facility is disposed with at least one personnel entrance/exit being communicative to the cultivation space, and the personnel entrance/exit is disposed with a channel gate for shielding the personnel entrance/exit.

According to the above technical features, the audio player of the audio adjustment unit is a software module being integrated into a hardware of the control unit.

According to the above technical features, the building facility is disposed with at least one personnel entrance/exit being communicative to the cultivation space, and the personnel entrance/exit is disposed with a channel gate for shielding the personnel entrance/exit; the audio player of the audio adjustment unit is a software module being integrated into a hardware of the control unit.

The vertical cultivation system for the crops can efficiently utilize the ground space, and the environmental condition for the planted crops or actual crop growth statuses, such as the nutrient, light, temperature, humidity, oxygen content of air and even sonic vibration frequency, can be adjusted in real time, thus helping to maintain the crop harvesting rate and crop quality. In particular, the nutrient liquid is prevented from being frozen, therefore providing a water temperature condition of relatively cheap cost for crop growth. Even, the audio adjustment unit applies sonic wave with a specific frequency on the crops, so as to excite mitochondria in cells to produce more carriers for receiving solar energy. Thus, the photosynthesis efficiency is improved, the cell cycle synchronization is stimulated, the cell division is accelerated, the crop growth is enhanced, and the objectives of increasing harvesting rate, enhancing the crop quality and resisting the crop disease are achieved.

### Brief Description of Drawings:

FIG. 1 is a schematic diagram showing a basic architecture of a vertical cultivation system for crops in the present invention.
FIG. 2 is a schematic diagram showing arrangements of the liquid storage tanks in the present invention.
FIG. 3 is a schematic diagram showing the structure of the photoelectric module in the present invention.
FIG. 4 is a schematic diagram showing the operation of the lighting unit in the present invention.
FIG. 5 is a schematic diagram showing the operation of the audio adjustment unit in the present invention.

### Descriptions of Exemplary Embodiments of the Invention:

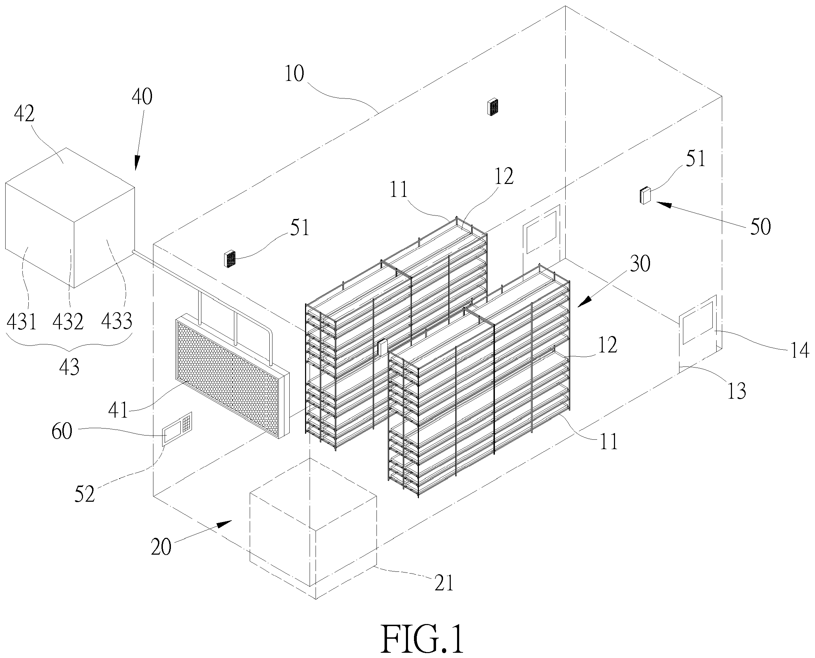

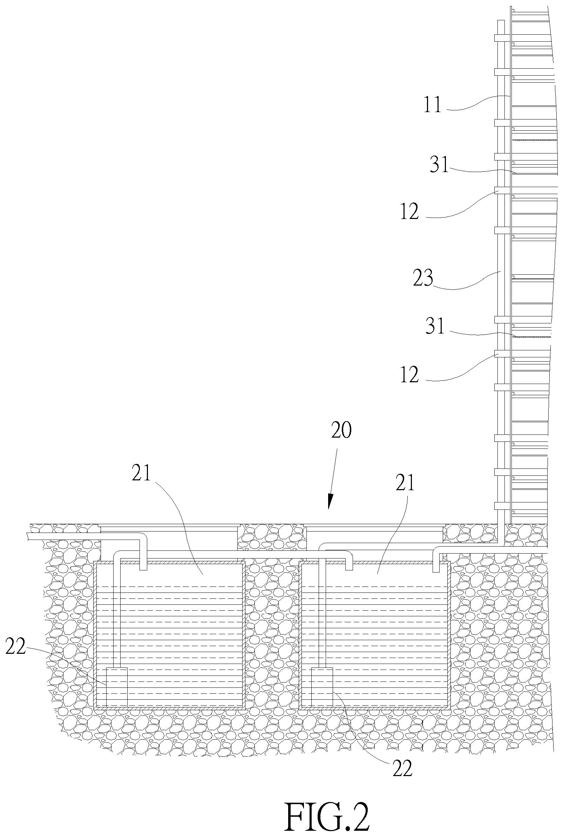

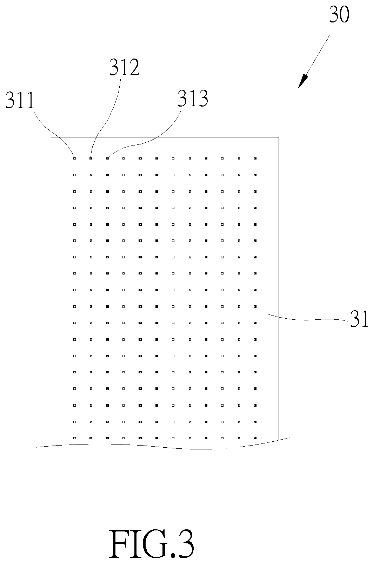

The present invention provides vertical cultivation system for crops, the system has a relatively low cost solution for providing a proper environmental condition of crop growth, and can immediately adjust the proper environmental condition of crop growth for different crops and different actual crop growth statuses. See FIG. 1 through FIG. 3, the vertical cultivation system for crops in the present invention basically comprises a building facility 10, a nutrient liquid supply unit 20, a lighting unit 30, an air conditioning unit 40, an audio adjustment unit 50 and a control unit 60. The building facility 10 covers and forms a cultivation space, the cultivation space is disposed with at least one shelf 11, and the shelf 11 is disposed with cultivation troughs 12 allocated on different layers. When implementing the present invention, each of the cultivation troughs 12 can have water tray structure for containing the water. The building facility 10 is disposed with at least one personnel entrance/exit 13 being communicative to the cultivation space, and the personnel entrance/exit 13 is disposed with a channel gate 14 for shielding the personnel entrance/exit 13.

The nutrient liquid supply unit 20 is disposed with at least one liquid storage tank 21 buried under a ground surface, the liquid storage tank 21 is communicative to each the cultivation troughs via a pump 22 a delivery pipeline 23. Under the barrier of the soil, the nutrient liquid in the liquid storage tank 21 is less affected by the external atmosphere temperature and prevented from being frozen or over hot, thus maintaining the specific temperature of the nutrient liquid. In implementing the present invention, when temperature on the ground surface is too cool, the utilized nutrient liquid in the liquid storage tank 21 is not required to be heated by a heating device since the liquid storage tank 21 is buried under the ground surface and has the barrier of the soil; or alternatively, when temperature on the ground surface is over hot, the utilized nutrient liquid in the liquid storage tank 21 is not required to be cooled down by a cooling device since the liquid storage tank 21 is buried under the ground surface and has the barrier of the soil. Thus, the present invention provides a relative low cost and energy saving solution for providing the suitable crop growth condition. Generally, when the crops perform the photosynthesis, the crops firstly transform NPK fertilizers into amino acids, and then transform the amino acids into proteins, lipids and carbohydrates. However, it is noted that, in the embodiment of the present invention, the biological fertilizers (i.e. microbial fertilizers) can be added in the liquid storage tank 21. Since the biological fertilizers are fermented twice and achieve to the peptide statuses (i.e. the biological fertilizers are fermented twice to be transformed into amino acids), when the crops obtain the nutrient liquid in the liquid storage tank 21 added with the biological fertilizers, the crops can directly absorb the amino acids and transform them into the proteins, lipids and carbohydrates, such that the essential illumination amount can be reduced. Further, when the liquid storage tank 21 is added with the biological fertilizers, those biological fertilizers can stimulate the crops to generate the useful secondary metabolites, and further have the function of biological sterilization.

The lighting unit 30 is disposed with at least one photoelectric module 31 corresponding to one of the cultivation troughs 12, and the photoelectric module 31 generates a preset light source when being powered on. The photoelectric module 31 of the lighting unit 30 is disposed with first photoelectric components 311, second photoelectric components 312 and third photoelectric components 313, the first photoelectric components 311, the second photoelectric components 312 and the third photoelectric components 313 respectively generate illumination light sources, long-wave ultraviolet (UVA) light sources, middle-wave ultraviolet (UVB) light sources when being powered on. The lighting unit 30 can preset and adjust the ON/OFF statues of the first photoelectric components 311, the second photoelectric components 312 and the third photoelectric components 313, via the operation of user or the system. In implementing the present invention, during the harvesting stage of the crops, the second photoelectric components 312 and the third photoelectric components 313 are turned on, so as to accelerate the maturity of the crops to increase the harvesting rate. In addition, it is noted that, the secondary metabolites of the crops can be modulated by using the long-wave ultraviolet (UVA) light, the middle-wave ultraviolet (UVB) light, the far-infrared light and the infrared light, wherein when the biomass reaches the standard, it is time to use infrared light.

The air conditioning unit 40 is disposed with at least one cooling pad 41 communicative to the cultivation space of the building facility 10, at least one water supply device 42 connected to the cooling pad 41 and at least one bubble module 43 in to the water supply device 42. When implementing the present invention, the bubble module 43 is connected to at least one oxygen bubble generator 431 via a pipe, or connected to at least one carbon dioxide bubble generator 432 via a pipe, or connected to at least one ozone bubble generator 433 via a pipe, or connected to combination of the above bubble generators via pipes. Preferably, the bubble module 43 is connected to at least one oxygen bubble generator 431, at least one carbon dioxide bubble generator 432 and at least one ozone bubble generator 433 via the pipes. One part of the bubble module 43 is soaked in the water of the water supply device 42, and the bubble module 43 can inject the oxygen gas, the carbon dioxide gas and the ozone gas into the water. Then, each of the bubble generators generates the micro bubbles or the nano bubbles with the diameters of 1×10⁻⁶m through 250×10⁻⁹m. Since the micro bubbles or the nano bubbles have the small diameters, and the buoyancy of the micro bubbles or the nano bubbles is small than 1/1000 times of that of the general bubbles, the oxygen retention stability in water is higher, and the amount of dissolved oxygen in water is a certain value under the conditions of constant temperature, constant pressure and constant electrolyte status of the water. At this time, the micro bubbles or the nano bubbles are bubbles of miscible in the water, so that the oxygen content available in the water is increased, and the sterilization and heat dissipation effects can be achieved.

The audio adjustment unit 50 is disposed with at least one speaker communicative to the cultivation space of the building facility 10 and an audio player 52 being electrically connected to speaker 51. When implementing the present invention, the audio player 52 of the audio adjustment unit 50 is a software module being integrated into a hardware of the control unit 60, wherein merely one audio adjustment unit 50, multiple audio adjustment units 50 or multiple audio adjustment units 50 arranged in an array can be disposed in the cultivation space of the building facility 10. The audio adjustment unit 50 can produce the sonic kinetic energy, and induce the resonant frequency with the ion channel of the plant nutrient transmission. Thus, the sonic kinetic energy can be transmitted to the crops to increase the nutrient absorbing efficiency of the crops, and this accelerates the maturity of the crops.

The control unit 60 is at least electrically connected to the pump 22, the photoelectric module 31, the bubble module 43 and the audio player 52, so as to at least control operations of the pump 22, the photoelectric module 31, the bubble module 43 and the audio player 52.

The vertical cultivation system for the crops s, provided by the present invention, can manage the planted crops in a manner of allocating the crops in different vertical layers, and thus the limited ground space can be efficiently utilized. Further, under the barrier of the soil, the nutrient liquid in the liquid storage tank 21 is less affected by the external atmosphere temperature and prevented from being frozen, and a low cost solution for providing proper water temperature condition to the crop growth is achieved.

By cooperation of the nutrient liquid supply unit 20, the lighting unit 30, the air conditioning unit 40, the audio adjustment unit 50 and the control unit 60, the environmental condition for the planted crops or actual crop growth statuses, such as the nutrient, light, temperature, humidity, oxygen content of air and even sonic vibration frequency, can be adjusted in real time, thus maintaining the crop harvesting rate and the crop quality.

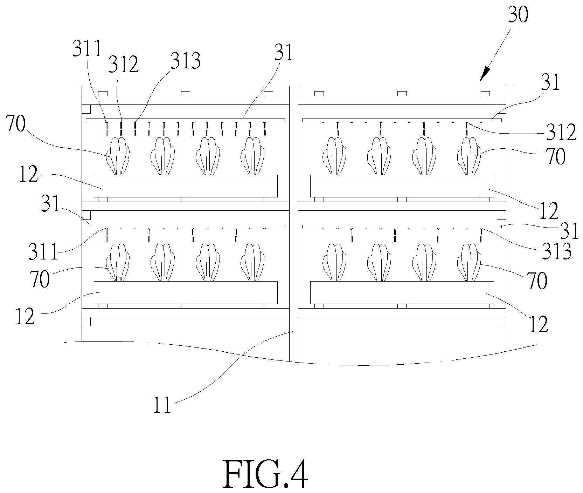

Referring to FIG. 4 at the same time, the vertical cultivation system for the crops not only pre-adjusts the illumination time, time period and illumination intensity of the crops 70 according to the characteristics of the crops 70, but also adjusts the operation times and sequences of the first photoelectric components 311, the second photoelectric components 312 and the third photoelectric components 313 associated with the photoelectric module 31 corresponding to the cultivation trough 12 according to the actual growth statuses of the crops 70. Therefore, the crops 70 planted in the cultivation trough 12 can have the better illumination effect.

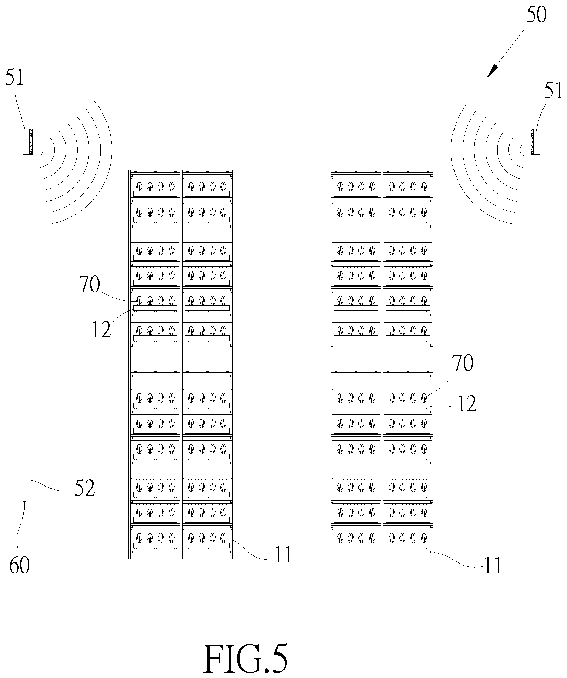

Referring to FIG. 5 at the same time, the vertical cultivation system for the crops, provided by the present invention, can utilize the operations of the speaker 51 and the audio player 52 of the audio adjustment unit 50 to apply the sonic wave with a specific frequency on the crops 70, so as to excite mitochondria in cells of the crops 70 to produce more carriers for receiving solar energy. Thus, the photosynthesis efficiency of the crops 70 is improved, the cell cycle synchronization is stimulated to accelerate the cell division, the growth of the crops 70 is enhanced, and the objectives of increasing harvesting rate, enhancing the crop quality and resisting the crop disease are achieved.

Referring to FIG. 1 at the same time, the control unit 60 of the present invention can be further disposed with at least one temperature sensor (not shown in drawings) and at least one humidity sensor (not shown in drawings) to monitor the temperature and humidity of the cultivation space in real time, therefore controlling the operation of the cooling pad 41 of the air conditioning unit 40. By the operation of the cooling pad 41, the humidification and cooling effects can be achieved, and under the cooperation of the oxygen bubble generator 431, the carbon dioxide bubble generator 432 and the ozone bubble generator 433 of the bubble module 43, the oxygen, carbon dioxide and ozone contents in the air can be improved.

It is noted that, the bubble module 43 can select one or combination of the oxygen bubble generator 431, the carbon dioxide bubble generator 432 and the ozone bubble generator 433 to operate, and preferably, the bubbles generated by each of the oxygen bubble generator 431, the carbon dioxide bubble generator 432 and the ozone bubble generator 433 are micro bubbles or nano bubble.

Specifically, the vertical cultivation system for the crops can efficiently utilize the ground space, and the environmental condition for the planted crops or actual crop growth statuses, such as the nutrient, light, temperature, humidity, oxygen content of air and even sonic vibration frequency, can be adjusted in real time, thus helping to maintain the crop harvesting rate and crop quality. In particular, the nutrient liquid is prevented from being frozen, therefore providing a water temperature condition of relatively cheap cost for crop growth. Even, the audio adjustment unit applies sonic wave with a specific frequency on the crops, so as to excite mitochondria in cells to produce more carriers for receiving solar energy. Thus, the photosynthesis efficiency is improved, the cell cycle synchronization is stimulated, the cell division is accelerated, the crop growth is enhanced, and the objectives of increasing harvesting rate, enhancing the crop quality and resisting the crop disease are achieved.

The above-mentioned descriptions represent merely the exemplary embodiment of the present invention, without any intention to limit the scope of the present invention thereto. Various equivalent changes, alternations or modifications can only be departed from the appended claims.

## Claims

1. A vertical cultivation system for crops, comprising: a building facility (10), a nutrient liquid supply unit (20), a lighting unit (30), an air conditioning unit (40), an audio adjustment unit (50) and a control unit (60); wherein:
the building facility (10) covers and forms a cultivation space, the cultivation space is disposed with at least one shelf (11), and the shelf (11) is disposed with cultivation troughs (12) allocated on different layers;
the lighting unit (30) is disposed with at least one photoelectric module (31);
**the air conditioning unit (40) is disposed communicative to the cultivation space of the building** facility (10); at least one water supply device (42) and at least one bubble module (43) connected to the water supply device (42); the audio adjustment unit (50) is disposed with at least one speaker (51) communicative to the cultivation space of the building facility (10) and an audio player (52) electrically connected to the speaker (51); and the control unit (60) is at least electrically connected to the pump (22), the photoelectric module (31), the bubble module (43) and the audio player (52), so as to at least control operations of the pump (22), the photoelectric module (31), the bubble module (43) and the audio player (52); **characterized in that** the lighting unit (30) is disposed with at least one photoelectric module (31) corresponding to one of the cultivation troughs (12), the photoelectric module (31) generating a preset light source when being powered on; the air conditioning unit (40) is disposed with at least one cooling pad (41) communicative to the cultivation space of the building facility (10), the at least one water supply device (42) being connected to the cooling pad (41) and the at least one bubble module (43) connected to the water supply device (42);
the nutrient liquid supply unit (20) is disposed with at least one liquid storage tank (21) buried under a ground surface, the liquid storage tank (21) is communicative to each of the cultivation troughs (12) via a pump (22) and a delivery pipeline (23).

2. The vertical cultivation system for the crops according to claim 1, wherein the bubble module (43) is disposed with at least one oxygen bubble generator (431).

3. The vertical cultivation system for the crops according to claim 1, wherein the bubble module (43) is disposed with at least one carbon dioxide bubble generator (432).

4. The vertical cultivation system for the crops according to claim 1, wherein the bubble module (43) is disposed with at least one ozone bubble generator (433).

5. The vertical cultivation system for the crops according to claim 1, wherein the bubble module (43) is disposed with at least one oxygen bubble generator (431) and at least one carbon dioxide bubble generator (432).

6. The vertical cultivation system for the crops according to claim 1, wherein the bubble module (43) is disposed with at least one carbon dioxide bubble generator (432) and at least one ozone bubble generator (433).

7. The vertical cultivation system for the crops according to claim 1, wherein the bubble module (43) is disposed with at least one oxygen bubble generator (431) and at least one ozone bubble generator (433).

8. The vertical cultivation system for the crops according to claim 1, wherein the bubble module (43) is disposed with at least one oxygen bubble generator (431), at least one carbon dioxide bubble generator (432) and at least one ozone bubble generator (433).

9. The vertical cultivation system for the crops according to claim 1, wherein the air conditioning unit (40) is disposed with at least one oxygen bubble generator (431) connected to the water supply device (42).

10. The vertical cultivation system for the crops according to claim 1, wherein the air conditioning unit (40) is disposed with at least one carbon dioxide bubble generator (432) connected to the water supply device (42).

11. The vertical cultivation system for the crops according to claim 1, wherein the air conditioning unit (40) is disposed with at least one ozone bubble generator (433) connected to the water supply device (42).

12. The vertical cultivation system for the crops according to claim 1, wherein the air conditioning unit (40) is disposed with the bubble module (43) connected to the water supply device (42), and the bubble module (43) is disposed with at least one oxygen bubble generator (431), at least one carbon dioxide bubble generator (432) and at least one ozone bubble generator (433).

13. The vertical cultivation system for the crops according to claim 1, wherein the air conditioning unit (40) is disposed with at least one oxygen bubble generator (431) connected to the water supply device (42); the photoelectric module (31) of the lighting unit (30) is disposed with first photoelectric components (311), second photoelectric components (312) and third photoelectric components (313), the first photoelectric components (311), the second photoelectric components (312) and the third photoelectric components (313) respectively generate illumination light sources, long-wave ultraviolet (UVA) light sources, middle-wave ultraviolet (UVB) light sources when being powered on.

14. The vertical cultivation system for the crops according to claim 1, wherein the air conditioning unit (40) is disposed with at least one carbon dioxide bubble generator (432) being connected to the water supply device (42); the photoelectric module (31) of the lighting unit (30) is disposed with first photoelectric components (311), second photoelectric components (312) and third photoelectric components (313), the first photoelectric components (311), the second photoelectric components (312) and the third photoelectric components (313) respectively generate illumination light sources, long-wave ultraviolet (UVA) light sources, middle-wave ultraviolet (UVB) light sources when being powered on.

15. The vertical cultivation system for the crops according to claim 1, wherein the air conditioning unit (40) is s disposed with at least one ozone bubble generator (433) being connected to the water supply device (42); the photoelectric module (31) of the lighting unit (30) is disposed with first photoelectric components (311), second photoelectric components (312) and third photoelectric components (313), the first photoelectric components (311), the second photoelectric components (312) and the third photoelectric components (313) respectively generate illumination light sources, long-wave ultraviolet (UVA) light sources, middle-wave ultraviolet (UVB) light sources when being powered on.

16. The vertical cultivation system for the crops according to claim 1, wherein the air conditioning unit (40) is disposed with the bubble module (43) being connected to the water supply device (42), and the bubble module (43) is disposed with at least one oxygen bubble generator (431), at least one carbon dioxide bubble generator (432) and at least one ozone bubble generator (433); the photoelectric module (31) of the lighting unit (30) is disposed with first photoelectric components (311), second photoelectric components (312) and third photoelectric components (313), the first photoelectric components (311), the second photoelectric components (312) and the third photoelectric components (313) respectively generate illumination light sources, long-wave ultraviolet (UVA) light sources, middle-wave ultraviolet (UVB) light sources when being powered on.

17. The vertical cultivation system for the crops according to claim 1, wherein the building facility (10) is disposed with at least one personnel entrance/exit (13) being communicative to the cultivation space, and the personnel entrance/exit (13) is disposed with a channel gate (14) for shielding the personnel entrance/exit (13).

18. The vertical cultivation system for the crops according to claim 1, wherein the audio player (52) of the audio adjustment unit (50) is a software module being integrated into a hardware of the control unit (60).

19. The vertical cultivation system for the crops according to claim 1, wherein the building facility (10) is disposed with at least one personnel entrance/exit (13) being communicative to the cultivation space, and the personnel entrance/exit (13) is disposed with a channel gate (14) for shielding the personnel entrance/exit (13); the audio player (52) of the audio adjustment unit (50) is a software module being integrated into a hardware of the control unit (60).

20. The vertical cultivation system for the crops according to claim 1, wherein the bubble module (43) is used to generate micro bubbles or nano bubbles.

21. The vertical cultivation system for the crops according to claim 20, wherein the micro bubble or the nano bubble has a diameter of 1×10⁻⁶m through 250×10⁻⁹m.

22. The vertical cultivation system for the crops according to claim 1, wherein the liquid storage tank (21) is added with a biological fertilizer.

## Patentansprüche

1. Vertikales Nutzpflanzenzuchtsystem, das ein Gebäude (10), eine Nährlösungsversorgungseinheit (20), eine Beleuchtungseinheit (30), eine Luftregeleinheit (40), eine Audioeinstelleinheit (50) und eine Steuereinheit (60) umfasst, wobei
das Gebäude (10) einen Zuchtraum umgibt, wobei im Zuchtraum mindestens ein Regal (11) angeordnet ist, wobei an dem Regal (11) eine Vielzahl von übereinander angeordneten Zuchtbetten (12) befestigt sind;
die Beleuchtungseinheit (30) mindestens ein photoelektrisches Modul (31) enthält;
die Luftregeleinheit (40) mit dem Zuchtraum des Gebäudes (10) verbunden ist und mindestens eine Wasserversorgungseinrichtung (42) und mindestens ein Blasenmodul (43), das mit der Wasserversorgungseinrichtung (42) verbunden ist, enthält; die Audioveinstelleinheit (50) mindestens einen Lautsprecher (51), der mit dem Zuchtraum des Gebäudes (10) verbunden ist, und einen Audiospieler (52), der elektrisch mit dem mindestens einen Lautsprecher (51) verbunden ist, enthält; die Steuereinheit (60) mindestens elektrisch mit der Nährlösungspumpe (22), den photoelektrischen Modulen (31), dem Blasenmodul (43) und dem Audiospieler (52) verbunden ist, um mindestens die Nährlösungspumpe (22), die photoelektrischen Module (31), das Blasenmodul (43) und den Audiospieler (52) zum Steuern, **dadurch gekennzeichnet, dass** die Beleuchtungseinheit (30) an den Zuchtbetten (12) jeweils ein photoelektrisches Modul (31) zum Erzeugen einer vorbestimmten Lichtquelle nach der Bestromung enthält; die Luftregeleinheit (40) mindestens einen Wasservorhang (41), der mit dem Zuchtraum des Gebäudes (10) verbunden ist, mindestens eine Wasserversorgungseinrichtung (42), die mit dem Wasservorhang (41) verbunden ist, und mindestens ein Blasenmodul (43), das mit der Wasserversorgungseinrichtung (42) verbunden ist, enthält; die Nährlösungsversorgungseinheit (20) mindestens einen Vorratsbehälter (21) in dem Untergrund enthält, wobei der Vorratsbehälter (21) durch eine Nährlösungspumpe (22) und und ein Nährlösungszuführungsrohr (23) mit den Zuchtbetten (12) verbunden ist.

2. Vertikales Nutzpflanzenzuchtsystem nach Anspruch 1, **dadurch gekennzeichnet, dass** das Blasenmodul (43) mindestens einen Sauerstoffblasenerzeuger (431) beinhaltet.

3. Vertikales Nutzpflanzenzuchtsystem nach Anspruch 1, **dadurch gekennzeichnet, dass** das Blasenmodul (43) mindestens einen Kohlendioxidblasenerzeuger (432) beinhaltet.

4. Vertikales Nutzpflanzenzuchtsystem nach Anspruch 1, **dadurch gekennzeichnet, dass** das Blasenmodul (43) mindestens einen Ozonblasenerzeuger (433) beinhaltet.

5. Vertikales Nutzpflanzenzuchtsystem nach Anspruch 1, **dadurch gekennzeichnet, dass** das Blasenmodul (43) mindestens einen Sauerstoffblasenerzeuger (431) und einen Kohlendioxidblasenerzeuger (432) beinhaltet.

6. Vertikales Nutzpflanzenzuchtsystem nach Anspruch 1, **dadurch gekennzeichnet, dass** das Blasenmodul (43) mindestens einen Kohlendioxidblasenerzeuger (432) und mindestens einen Ozonblasenerzeuger (433) beinhaltet.

7. Vertikales Nutzpflanzenzuchtsystem nach Anspruch 1, **dadurch gekennzeichnet, dass** das Blasenmodul (43) mindestens einen Sauerstoffblasenerzeuger (431) und mindestens einen Ozonblasenerzeuger (433) beinhaltet.

8. Vertikales Nutzpflanzenzuchtsystem nach Anspruch 1, **dadurch gekennzeichnet, dass** das Blasenmodul (43) mindestens einen Sauerstoffblasenerzeuger (431), mindestens einen Kohlendioxidblasenerzeuger (432) und mindestens einen Ozonblasenerzeuger (433) beinhaltet.

9. Vertikales Nutzpflanzenzuchtsystem nach Anspruch 1, **dadurch gekennzeichnet, dass** die Luftregeleinheit (40) mindestens einen Sauerstoffblasenerzeuger (431) beinhaltet, der mit der Wasserversorgungseinrichtung (42) verbunden ist.

10. Vertikales Nutzpflanzenzuchtsystem nach Anspruch 1, **dadurch gekennzeichnet, dass** die Luftregeleinheit (40) mindestens einen Kohlendioxidblasenerzeuger (432) beinhaltet, der mit der Wasserversorgungseinrichtung (42) verbunden ist.

11. Vertikales Nutzpflanzenzuchtsystem nach Anspruch 1, **dadurch gekennzeichnet, dass** die Luftregeleinheit (40) mindestens einen Ozonblasenerzeuger (433) beinhaltet, der mit der Wasserversorgungseinrichtung (42) verbunden ist.

12. Vertikales Nutzpflanzenzuchtsystem nach Anspruch 1, **dadurch gekennzeichnet, dass** die Luftregeleinheit (40) das Blasenmodul (43) enthält, das mit der Wasserversorgungseinrichtung (42) verbunden ist und mindestens einen Sauerstoffblasenerzeuger (431), mindestens einen Kohlendioxidblasenerzeuger (432) und mindestens einen Ozonblasenerzeuger (433) beinhaltet.

13. Vertikales Nutzpflanzenzuchtsystem nach Anspruch 1, **dadurch gekennzeichnet, dass** die Luftregeleinheit (40) mindestens einen Sauerstoffblasenerzeuger (431) beinhaltet, der mit der Wasserversorgungseinrichtung (42) verbunden ist, und dass jedes photoelektrische Modul (31) der Beleuchtungseinheit (30) eine Vielzahl von ersten photoelektrischen Elementen (311), eine Vielzahl von zweiten photoelektrischen Elementen (312) und eine Vielzahl von dritten photoelektrischen Elementen (313) beinhaltet, wobei die ersten photoelektrischen Elemente (311), die zweiten photoelektrischen Elemente (312) und die dritten photoelektrischen Elemente (313) nach der Bestromung ein Beleuchtungslicht, ein langwelliges ultraviolettes Licht (UVA) und ein mittelwelliges ultraviolettes Licht (UVB) erzeugen.

14. Vertikales Nutzpflanzenzuchtsystem nach Anspruch 1, **dadurch gekennzeichnet, dass** die Luftregeleinheit (40) mindestens einen Kohlendioxidblasenerzeuger (432) beinhaltet, der mit der Wasserversorgungseinrichtung (42) verbunden ist, und dass jedes photoelektrische Modul (31) der Beleuchtungseinheit (30) eine Vielzahl von ersten photoelektrischen Elementen (311), eine Vielzahl von zweiten photoelektrischen Elementen (312) und eine Vielzahl von dritten photoelektrischen Elementen (313) beinhaltet, wobei die ersten photoelektrischen Elemente (311), die zweiten photoelektrischen Elemente (312) und die dritten photoelektrischen Elemente (313) nach der Bestromung ein Beleuchtungslicht, ein langwelliges ultraviolettes Licht (UVA) und ein mittelwelliges ultraviolettes Licht (UVB) erzeugen.

15. Vertikales Nutzpflanzenzuchtsystem nach Anspruch 1, **dadurch gekennzeichnet, dass** die Luftregeleinheit (40) mindestens einen Ozonblasenerzeuger (433) beinhaltet, der mit der Wasserversorgungseinrichtung (42) verbunden ist, und dass jedes photoelektrische Modul (31) der Beleuchtungseinheit (30) eine Vielzahl von ersten photoelektrischen Elementen (311), eine Vielzahl von zweiten photoelektrischen Elementen (312) und eine Vielzahl von dritten photoelektrischen Elementen (313) beinhaltet, wobei die ersten photoelektrischen Elemente (311), die zweiten photoelektrischen Elemente (312) und die dritten photoelektrischen Elemente (313) nach der Bestromung ein Beleuchtungslicht, ein langwelliges ultraviolettes Licht (UVA) und ein mittelwelliges ultraviolettes Licht (UVB) erzeugen.

16. Vertikales Nutzpflanzenzuchtsystem nach Anspruch 1, **dadurch gekennzeichnet, dass** die Luftregeleinheit (40) ein Blasenmodul (43) enthält, das mindestens einen Sauerstoffblasenerzeuger (431), mindestens einen Kohlendioxidblasenerzeuger (432) und mindestens einen Ozonblasenerzeuger (433) beinhaltet, und dass jedes photoelektrische Modul (31) der Beleuchtungseinheit (30) eine Vielzahl von ersten photoelektrischen Elementen (311), eine Vielzahl von zweiten photoelektrischen Elementen (312) und eine Vielzahl von dritten photoelektrischen Elementen (313) beinhaltet, wobei die ersten photoelektrischen Elemente (311), die zweiten photoelektrischen Elemente (312) und die dritten photoelektrischen Elemente (313) nach der Bestromung ein Beleuchtungslicht, ein langwelliges ultraviolettes Licht (UVA) und ein mittelwelliges ultraviolettes Licht (UVB) erzeugen.

17. Vertikales Nutzpflanzenzuchtsystem nach Anspruch 1, **dadurch gekennzeichnet, dass** das Gehäuse (10) mindestens einen Personeneingang und -ausgang (13) aufweist, der mit dem Zuchtraum (11) verbunden ist, wobei an dem Personeneingang und -ausgang (13) eine Schleuse (14) vorgesehen ist, die den Personeneingang und -ausgang schließen kann.

18. Vertikales Nutzpflanzenzuchtsystem nach Anspruch 1, **dadurch gekennzeichnet, dass** der Audiospieler (52) der Audioveinstelleinheit (50) softwaretechnisch in der Hardware der Steuereinheit (60) integriert wird.

19. Vertikales Nutzpflanzenzuchtsystem nach Anspruch 1, **dadurch gekennzeichnet, dass** das Gehäuse (10) mindestens einen Personeneingang und -ausgang (13) aufweist, der mit dem Zuchtraum (11) verbunden ist, wobei an dem Personeneingang und -ausgang (13) eine Schleuse (14) vorgesehen ist, die den Personeneingang und -ausgang schließen kann, und dass der Audiospieler (52) der Audioveinstelleinheit (50) softwaretechnisch in der Hardware der Steuereinheit (60) integriert wird.

20. Vertikales Nutzpflanzenzuchtsystem nach Anspruch 1, **dadurch gekennzeichnet, dass** das Blasenmodul (43) Mikroblasen oder Nanoblasen erzeugen kann.

21. Vertikales Nutzpflanzenzuchtsystem nach Anspruch 20, **dadurch gekennzeichnet, dass** der Durchmesser der Mikroblasen oder Nanoblasen im Bereich zwischen 1×10⁻⁶m und 250×10⁻⁹m liegt.

22. Vertikales Nutzpflanzenzuchtsystem nach Anspruch 1, **dadurch gekennzeichnet, dass** ein Biodünger in den Vorratsbehälter (21) zugegeben wird.

## Revendications

1. Un système de culture verticale pour cultures, comprenant : un bâtiment (10), une unité d'alimentation en liquide nutritif (20), une unité d'éclairage (30), une unité de climatisation (40), une unité de réglage audio (50) et une unité de contrôle (60) ; dans lequel :
le bâtiment (10) couvre et forme un espace de culture, l'espace de culture dispose d'au moins une étagère (11), et l'étagère (11) est équipée de bacs de culture (12) réparties sur différents niveaux;
l'unité d'éclairage (30) est équipée d'au moins un module photoélectrique (31) ;
l'unité de climatisation (40) est placée de façon à pouvoir communiquer avec l'espace de culture du bâtiment (10) ;
il y a au moins un dispositif d'alimentation en eau (42) et au moins un module à bulles (43) est connecté à ce dispositif d'alimentation en eau (42) ;
l'unité de réglage audio (50) est équipée avec au moins un haut-parleur (51) en communication avec l'espace de culture du bâtiment (10) et un lecteur audio (52) est relié électriquement à ce haut-parleur (51) ; et l'unité de contrôle (60) est connectée électriquement, au moins à la pompe (22), le module photoélectrique (31), le module de bulles (43) et le lecteur audio (52), de façon à pouvoir au moins contrôler l'utilisation de la pompe (22), du module photoélectrique (31), du module de bulles (43) et du lecteur audio (52) ; **caractérisée par le fait que** l'unité d'éclairage (30) est équipée au moins d'un module photoélectrique (31) générant une source de luminosité prédéfinie lorsqu'il est allumé ; l'unité de climatisation (40) est équipée avec au moins un support de dissipation thermique (41) en communication avec l'espace de culture du bâtiment (10), le dispositif d'alimentation en eau (42), au moins au nombre de un, étant relié au support de dissipation thermique (41) et au module de bulles (43), au moins au nombre de un, relié au dispositif d'alimentation en eau (42);
l'unité d'alimentation en liquide nutritif (20) est équipée d'au moins un réservoir de stockage de liquide (21) enfoui sous la surface du sol, le réservoir de stockage de liquide (21) communique avec chacun des bacs de culture (12) via une pompe (22) et une canalisation d'alimentation (23).

2. Le système de culture verticale pour cultures selon la revendication 1, dans lequel le module de bulles (43) est équipé d'au moins un générateur de bulles d'oxygène (431).

3. Le système de culture verticale pour cultures selon la revendication 1, dans lequel le module de bulles (43) est équipé d'au moins un générateur de bulles de dioxyde de carbone (432).

4. Le système de culture verticale pour cultures selon la revendication 1, dans lequel le module de bulles (43) est équipé d'au moins un générateur de bulles d'ozone (433).

5. Le système de culture verticale pour cultures selon la revendication 1, dans lequel le module de bulles (43) est équipé d'au moins un générateur de bulles d'oxygène (431) et au moins un générateur de bulles de dioxyde de carbone (432).

6. Le système de culture verticale pour cultures selon la revendication 1, dans lequel le module de bulles (43) est équipé d'au moins un générateur de bulles de dioxyde de carbone (432) et d'au moins un générateur de bulles d'ozone (433).

7. Le système de culture verticale pour cultures selon la revendication 1, dans lequel le module de bulles (43) est équipé d'au moins un générateur de bulles d'oxygène (431) et d'au moins un générateur de bulles d'ozone (433).

8. Le système de culture verticale pour cultures selon la revendication 1, dans lequel le module de bulles (43) est équipé d'au moins un générateur de bulles d'oxygène (431), au moins un générateur de bulles de dioxyde de carbone (432) et au moins un générateur de bulles d'ozone (433).

9. Le système de culture verticale pour cultures selon la revendication 1, dans lequel l'unité de climatisation (40) est équipée d'au moins un générateur de bulles d'oxygène (431) connecté au dispositif d'alimentation en eau (42).

10. Le système de culture verticale pour cultures selon la revendication 1, dans lequel l'unité de climatisation (40) est équipée d'au moins un générateur de bulles de dioxyde de carbone (432) connecté au dispositif d'alimentation en eau (42).

11. Le système de culture verticale pour cultures selon la revendication 1, dans lequel l'unité de climatisation (40) est équipée d'au moins un générateur de bulles d'ozone (433) connecté au dispositif d'alimentation en eau (42).

12. Le système de culture verticale pour cultures selon la revendication 1, dans lequel l'unité de climatisation (40) est équipée d'au moins un module de bulles (43) connecté au dispositif d'alimentation en eau (42), et le module de bulles (43) est équipé d'au moins un générateur de bulles d'oxygène (431), au moins un générateur de bulles de dioxyde de carbone (432) et au moins un générateur de bulles d'ozone (433).

13. Le système de culture verticale pour cultures selon la revendication 1, dans lequel l'unité de climatisation (40) est équipée d'au moins un générateur de bulles d'oxygène (431) connecté au dispositif d'alimentation en eau (42) ; le module photoélectrique (31) de l'unité d'éclairage (30) est équipé d'un premier composant photoélectrique (311), d'un second composant photoélectrique (312) et d'un troisième composant photoélectrique (313) ; le premier composant photoélectrique (311), le second composant photoélectrique (312) et le troisième composant photoélectrique (313) génèrent respectivement une source de lumière, une source de lumière ultraviolette à ondes longues (UVA) et une source de lumière ultraviolette à ondes moyennes (UVB) lorsqu'ils sont allumés.

14. Le système de culture verticale pour cultures selon la revendication 1, dans lequel l'unité de climatisation (40) est équipée d'au moins un générateur de bulles de dioxyde de carbone (432) connecté au dispositif d'alimentation en eau (42) ; le module photoélectrique (31) de l'unité d'éclairage (30) est équipé d'un premier composant photoélectrique (311), d'un second composant photoélectrique (312) et d'un troisième composant photoélectrique (313); le premier composant photoélectrique (311), le second composant photoélectrique (312) et le troisième composant photoélectrique (313) génèrent respectivement une source de lumière, une source de lumière ultraviolette à ondes longues (UVA) et une source de lumière ultraviolette à ondes moyennes (UVB) lorsqu'ils sont allumés.

15. Le système de culture verticale pour cultures selon la revendication 1, dans lequel l'unité de climatisation (40) est équipée d'au moins un générateur de bulles d'ozone (433) connecté au dispositif d'alimentation en eau (42) ; le module photoélectrique (31) de l'unité d'éclairage (30) est équipé d'un premier composant photoélectrique (311), d'un second composant photoélectrique (312) et d'un troisième composant photoélectrique (313); le premier composant photoélectrique (311), le second composant photoélectrique (312) et le troisième composant photoélectrique (313) génèrent respectivement une source de lumière, une source de lumière ultraviolette à ondes longues (UVA) et une source de lumière ultraviolette à ondes moyennes (UVB) lorsqu'ils sont allumés.

16. Le système de culture verticale pour cultures selon la revendication 1, dans lequel l'unité de climatisation (40) est équipée d'un module de bulles (43) connecté au dispositif d'alimentation en eau (42); le module de bulles (43) est équipé d'au moins un générateur de bulles d'oxygène (431), au moins un générateur de bulles de dioxyde de carbone (432) et au moins un générateur de bulles d'ozone (433) ; le module photoélectrique (31) de l'unité d'éclairage (30) est équipé d'un premier composant photoélectrique (311), d'un second composant photoélectrique (312) et d'un troisième composant photoélectrique (313) ; le premier composant photoélectrique (311), le second composant photoélectrique (312) et le troisième composant photoélectrique (313) génèrent respectivement une source de lumière, une source de lumière ultraviolette à ondes longues (UVA) et une source de lumière ultraviolette à ondes moyennes (UVB) lorsqu'ils sont allumés.

17. Le système de culture verticale pour cultures selon la revendication 1, dans lequel le bâtiment (10) dispose d'au moins une entrée/sortie pour le personnel (13) qui communique avec l'espace de cultures, et cette entrée/sortie du personnel (13) est équipée d'une grille extensible (14) pour protéger l'entrée/sortie du personnel (13).

18. Le système de culture verticale pour cultures selon la revendication 1, dans lequel le lecteur audio (52) de l'unité de réglage audio est un module logiciel intégré dans le matériel de l'unité de contrôle (60).

19. Le système de culture verticale pour cultures selon la revendication 1, dans lequel le bâtiment (10) dispose d'au moins une entrée/sortie pour le personnel (13) qui communique avec l'espace de cultures, et cette entrée/sortie du personnel (13) est équipée d'une grille extensible (14) pour protéger l'entrée/sortie du personnel (13) ; le lecteur audio (52) de l'unité de réglage audio est un module logiciel intégré dans le matériel de l'unité de contrôle (60).

20. Le système de culture verticale pour cultures selon la revendication 1, dans lequel le module de bulles (43) est utilisé pour générer des micro bulles ou des nano bulles.

21. Le système de culture verticale pour cultures selon la revendication 20, dans lequel les micro bulles ou les nano bulles ont un diamètre allant de 1×10⁻⁶m à 250×10⁻⁹m,

22. Le système de culture verticale pour cultures selon la revendication 1, dans lequel un engrais biologique est ajouté dans le réservoir de stockage de liquide (21).
